# FASCICULE DE BREVET EUROPEEN

(11) **EP 2 331 618 B1**
(45) Date de publication et mention de la délivrance du brevet: **25.03.2020**
(21) Numéro de dépôt: 09783202.6
(22) Date de dépôt: 18.09.2009
(51) Int. Cl.: C08K 3/04, C08L 21/00, B60C 1/00

(54) **FLANC POUR PNEUMATIQUE**
SEITENWAND FÜR REIFEN
TYRE SIDEWALL

(30) Priorité: 18.09.2008 FR 0856294
(43) Date de publication de la demande: 15.06.2011
(73) Titulaire: Compagnie Générale des Etablissements Michelin, 63000 Clermont-Ferrand (FR)
(72) Inventeur: PENNEQUIN, Patrick, 63720 Ennezat (FR); DUREL, Olivier, 63040 Clermont-Ferrand Cedex 9 (FR); SEMONSUT, Serge, 63360 Gerzat (FR); VIDAL, Gilles, 63170 Pérignat lès Sarliève (FR)
(74) Mandataire: Cohen, Sylvia
(86) Numéro de dépôt international: PCT/EP2009/062148
(87) Numéro de publication internationale: WO 2010/031855

(56) Documents cités:
- EP-A- 1 231 080
- FR-A- 2 880 349
- US-A1- 2008 161 458

## Description

La présente invention concerne un pneumatique comportant des flancs à base d'une composition de caoutchouc, et plus particulièrement un pneumatique destiné à équiper des véhicules portant de lourdes charges et roulant à vitesse soutenue, tels que, par exemple les camions, tracteurs, remorques ou bus routiers.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. Or depuis que les économies de carburant et la nécessité de protéger l'environnement sont devenues une priorité, il est important que les pneumatiques aient une faible consommation d'énergie. L'une des sources de dissipation d'énergie est l'échauffement du pneumatique, notamment dû aux sollicitations en flexion auxquelles un pneumatique est soumis et plus particulièrement auxquelles les flancs du pneumatique sont soumis.

Ces sollicitations statiques ou dynamiques prolongées des flancs en présence d'ozone, font apparaître des craquelures ou des fissures plus ou moins marquées dont la propagation sous l'effet de la persistance des contraintes peut provoquer une avarie importante du flanc concerné.

Afin de remédier à l'inconvénient ci-dessus, tout en maintenant les propriétés du flanc en terme de faible résistance au roulement, bonne résistance à l'usure du flanc par râpages sur les trottoirs, bon renforcement, conduction, la demanderesse a découvert de façon surprenante que des flancs de pneumatique à base de compositions de caoutchouc incluant à titre de charge renforçante des noirs de carbone dits « fins », c'est-à-dire ayant une surface spécifique CTAB supérieure ou égale à 90 m²/g, permettaient de pallier l'inconvénient précité tout en gardant un bon compromis de l'ensemble des propriétés du flanc.

Des compositions « classiques » pour flanc de pneumatiques sont notamment décrites dans le tableau 1 du brevet EP 1 097 966.

Le brevet FR-A-2 880 349 décrit l'utilisation de nanoparticules de polyvinylaromatique (PVAr) fonctionalisées et réticulées en tant que charge renforçante dans des compositions à base d'au moins un élastomère diénique pour le renforcement de produits semi-finis pour pneumatiques tels que les flancs. Ces compositions comprennent également un noir de carbone "fin" en faible quantité.

Les compositions de caoutchouc du brevet EP-A-0 989 161 sont destinées à la préparation de flancs ou bandes de roulement comprenant (a) un mélange polyisoprene et polybutadiène, (b) 10-60 pce de noir de carbone et (c) 20-60 pce de silice. Les composition pour flancs utilisent un noir de carbone de série N300 (CTAB<90 m2/g).

Comme l'illustrent de nombreux documents parmi lesquels ont peut citer les documents EP 1 231 080, EP 1 526 005, US 7 105 595, il est connu pour l'homme du métier d'utiliser plus préférentiellement pour la fabrication des flancs, des compositions de caoutchouc à base de coupage de caoutchouc naturel et de caoutchouc synthétique, des noirs de carbones dits « grossiers » qui correspondent à un grade ASTM 300 jusqu'à 700, c'est-à-dire des noirs de carbone ayant une surface spécifique CTAB inférieure à 90 m²/g.

Contrairement aux a priori de l'homme du métier qui chercherait afin de baisser l'hystérèse d'une composition élastomérique pour flanc de pneumatique, à utiliser des charges renforçantes plus grossières en réduisant le volume de la charge dans la formulation, la demanderesse a découvert qu'au contraire l'utilisation de charges plus fines permettaient de baisser la résistance au roulement tout en maintenant les autres performances du flanc.

L'invention concerne un flanc pour pneumatique, ayant une composition de caoutchouc à base d'au moins un élastomère diénique, une charge renforçante comprenant du noir de carbone et un système de vulcanisation, caractérisé en ce que le noir de carbone a une surface spécifique CTAB supérieure ou égale à 90 m²/g et que la proportion de ce noir de carbone est comprise entre 30 et 40 pce, le noir de carbone constituant la charge renforçante majoritaire, de préférence supérieure ou égale à 33 pce et encore plus préférentiellement supérieure ou égale à 35 pce.

La composition de caoutchouc comprend de 35 à 55% de caoutchouc naturel ou de polysioprène de synthèse, et de 65 à 45 % d'un élastomère diénique choisi parmi les polybutadiène, les copolymères styrène-butadiènes, les copolymères d'isoprène-butadiène, les copolymères d'isoprène-styrène et les copolymères d'isoprène-butadiène-styrène.

L'invention a encore pour objet un procédé de préparation d'une composition pour flanc de pneumatique, à base d'au moins un élastomère diénique, une charge renforçante comprenant du noir de carbone et un système de vulcanisation, caractérisé en ce que le noir de carbone a une surface spécifique CTAB supérieure ou égale à 90 m²/g et que la proportion de ce noir de carbone est comprise entre 30 et 40 pce, le noir de carbone constituant la charge renforçante majoritaire, et qui comprend les étapes suivantes :
- incorporer à l'élastomère diénique le noir de carbone, en malaxant thermomécaniquement le tout, en une ou plusieurs fois, jusqu'à atteindre une température maximale comprise entre 110°C et 190°C ;
- refroidir l'ensemble à une température inférieure à 100°C ;
- incorporer ensuite le système de vulcanisation ;
- malaxer le tout jusqu'à une température maximale inférieure à 110°C.

L'invention concerne également un pneumatique comportant un flanc ayant une composition de caoutchouc à base d'au moins un élastomère diénique, une charge renforçante comprenant du noir de carbone et un système de vulcanisation, caractérisé en ce que le noir de carbone a une surface spécifique CTAB supérieure ou égale à 90 m²/g et que la proportion de ce noir de carbone est comprise entre 30 et 40 pce, le noir de carbone constituant la charge renforçante majoritaire, et notamment un pneumatique destiné à équiper des véhicules poids lourd ou des véhicules de tourisme.

### I. MESURES ET TESTS UTILISES

Les compositions de caoutchouc sont caractérisées, avant et après cuisson, comme indiqué ci-après.

### 1-1 Résistance au roulement

La résistance au roulement est mesurée selon les normes ISO 9948 (pour aux pneumatiques pour véhicules poids lourds) et permet la mesure de l'énergie dissipée lors de l'appui du pneumatique sur un volant entraîné par un moteur et qui freine donc la rotation de ce moteur.

### I-2 Performance fissuration

On réalise un roulage sur volant d'un pneumatique pendant 50 km à pression et charge constante, sur lequel on a effectué une entaille initiale de 20mm de longueur et de 1mm de profondeur sur le flanc, qui se propage. L'indice de performance est le rapport entre la longueur propagée en surface du pneumatique témoin par la longueur propagée en surface du pneumatique à mesurer. Le témoin ayant au départ un indice 100, une valeur supérieure à 100 indique une meilleure performance en résistance à la fissuration.

### II- DESCRIPTION DETAILLEE DE L'INVENTION

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### II-1. Elastomère diénique

Par élastomère ou caoutchouc "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a)- tout homopolymère obtenu par polymérisation d'un monomère diène conjugué ayant de 4 à 12 atomes de carbone;
(b)- tout copolymère obtenu par copolymérisation d'un ou plusieurs diènes conjugués entre eux ou avec un ou plusieurs composés vinyle aromatique ayant de 8 à 20 atomes de carbone;
(c)- un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d)- un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en œuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

En résumé, l'élastomère diénique de la composition conforme à l'invention est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un mode de réalisation particulier, la composition conforme à l'invention peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

Les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### II-2. Charge renforçante

On utilise à titre de charge renforçante une charge organique constituée par du noir de carbone. Comme noirs de carbone conviennent tous les noirs de carbone renforçants ayant une surface spécifique CTAB supérieure ou égale à 90 m²/g, ce qui correspond en particuliers à des noirs de carbone des séries 100, 200 (grades ASTM), comme par exemple les noirs N115, N134, N220, N234. Les noirs de carbone pourraient être par exemple déjà incorporés à l'élastomère isoprénique sous la forme d'un masterbatch (voir par exemple demandes WO 97/36724 ou WO 99/16600).

Précisons que la surface spécifique CTAB est déterminée selon la norme française NF T 45-007 de novembre 1987 (méthode B).

A ce noir de carbone, peut être associé en coupage une ou des autres charges organiques, tel que par exemple des charges organiques de polyvinylaromatique fonctionnalisé telles que décrites dans les demandes WO-A-2006/069792 et WO-A-2006/069793, et/ou une ou plusieurs charges inorganiques renforçantes telle que de la silice.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

Pour une composition pour flanc de pneumatique conforme à l'invention, on utilise préférentiellement à titre de charge renforçante du noir de carbone ayant une surface spécifique supérieure ou égale à 90 m²/g dans une proportion comprise entre 30 et 40 pce. On entend « comprise entre » au sens large, c'est à dire que la proportion de noir de carbone est supérieure ou égale à 30 pce et inférieure ou égale à 40 pce. De préférence le taux de noir de carbone est compris entre 33 et 40 pce, et encore plus préférentiellement entre 35 et 40 pce.

Le noir de carbone constitue la seule charge renforçante ou la charge renforçante majoritaire. Bien entendu on peut utiliser ce seul noir de carbone ou un coupage avec un ou plusieurs autres noirs de carbone ayant des grades ASTM différents.

### II-3. Additifs divers

Les compositions de caoutchouc conformes à l'invention peuvent comporter également tout ou partie des additifs usuels habituellement utilisés dans les compositions d'élastomères destinées à la fabrication de pneumatiques ou produits semi-finis pour pneumatiques, comme par exemple d'autres plastifiants (autres que le système plastifiant de l'invention), de préférence non aromatiques ou très faiblement aromatiques, par exemple des huiles naphténiques, paraffiniques, des huiles MES ou TDAE, des esters (en particulier trioléates) de glycérol notamment des esters naturels tels que huiles végétales de colza ou de tournesol, des pigments, des agents de protection tels que agents anti-ozonants, anti-oxydants, des agents anti-fatigue, un système de réticulation à base soit de soufre, soit de donneurs de soufre et/ou de peroxyde et/ou de bismaléimides, des accélérateurs de vulcanisation, des activateurs de vulcanisation, des agents anti-réversion. Ces compositions peuvent également contenir, en complément des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur processabilité à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### II- 4. Fabrication des compositions de caoutchouc

Les compositions sont fabriquées dans des mélangeurs appropriés, en utilisant deux phases de préparation successives bien connues de l'homme du métier : une première phase de travail ou malaxage thermomécanique à haute température, jusqu'à une température maximale comprise entre 110°C et 190°C, de préférence entre 130°C et 180°C, suivie d'une seconde phase de travail mécanique jusqu'à une plus basse température, typiquement inférieure à 110°C, par exemple entre 40°C et 100°C, phase de finition au cours de laquelle est incorporé le système de réticulation.

Le procédé conforme à l'invention pour préparer une composition de caoutchouc pour gomme intérieure de pneumatique, comporte les étapes suivantes :
- incorporer à un élastomère, au cours d'une première étape, au moins une charge renforçante, du graphite en malaxant thermomécaniquement le tout, en une ou plusieurs fois, jusqu'à atteindre une température maximale comprise entre 110°C et 190°C ;
- incorporer ensuite, au cours d'une seconde étape, un système de réticulation ;
- malaxer le tout jusqu'à une température maximale inférieure à 110°C.

Ces deux étapes peuvent être réalisées de manière consécutive sur un même mélangeur ou être séparée par une étape de refroidissement à une température inférieure à 100°C, la dernière étape étant alors réalisée sur un deuxième mélangeur.
A titre d'exemple, la première phase est conduite en une seule étape thermomécanique au cours de laquelle on introduit, dans un mélangeur approprié tel qu'un mélangeur interne usuel, dans un premier temps tous les constituants de base nécessaires (élastomère, charge renforçante et agent de couplage si nécessaire et graphite), puis dans un deuxième temps, par exemple après une à deux minutes de malaxage, les autres additifs, éventuels agents de recouvrement ou de mise en œuvre complémentaires, à l'exception du système de réticulation. Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé pendant quelques minutes, par exemple entre 2 et 15 min.

Le système de réticulation est préférentiellement un système de vulcanisation à base de soufre et d'un accélérateur. On peut utiliser tout composé susceptible d'agir comme accélérateur de vulcanisation des élastomères en présence de soufre, en particulier ceux choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés. De préférence, on utilise un accélérateur primaire du type sulfénamide.

A ce système de vulcanisation viennent s'ajouter, incorporés au cours de la première phase et/ou au cours de la deuxième phase, divers accélérateurs secondaires ou activateurs de vulcanisation connus tels que oxyde de zinc, acide stéarique, dérivés guanidiques (en particulier diphénylguanidine), etc.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis tels que des flancs de pneumatique.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

Les exemples qui suivent illustrent l'invention, sans toutefois la limiter.

### III. EXEMPLES DE REALISATION DE L'INVENTION

### III-1 Préparation des compositions de caoutchouc

On procède pour les essais qui suivent de la manière suivante: on introduit dans un mélangeur interne, rempli à 70% et dont la température initiale de cuve est d'environ 90°C, l'élastomère diénique (coupage SBR et BR), la silice complétée par une faible quantité de noir de carbone, l'agent de couplage puis, après une à deux minutes de malaxage, les divers autres ingrédients à l'exception du système de vulcanisation. On conduit alors un travail thermomécanique (phase non-productive) en une étape (durée totale du malaxage égale à environ 5 min), jusqu'à atteindre une température maximale de "tombée" d'environ 165°C. On récupère le mélange ainsi obtenu, on le refroidit puis on ajoute l'agent de recouvrement (lorsque ce dernier est présent) et le système de vulcanisation (soufre et accélérateur sulfénamide) sur un mélangeur externe (homo-finisseur) à 70°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme flancs de pneumatiques.

### III-2. Essais

Cet exemple a pour but de montrer l'amélioration de flancs de pneumatiques conformes à l'invention par rapport à des flancs d'un pneumatique témoin « classique » pour véhicule poids-lourds.
Les pneumatiques de dimension 315/60R22,5 ont été réalisés avec des flancs ayant respectivement des compositions A, B et C.

Les trois compositions A, B et C de flancs de pneumatiques ont été fabriquées conformément au procédé détaillé dans le paragraphe précédent. Ces compositions détaillées dans le tableau 1 (où les quantités sont exprimées en pce, parties en poids pour cent parties d'élastomère) qui suit, diffèrent par la nature et la quantité de leur charge renforçante respective, ainsi que par la quantité de plastifiant utilisée.
Les formulations sont présentées dans le tableau 1 qui suit.

**Tableau 1**

| **Composition :** | **A** | **B** | **C** |
|---|---|---|---|
| NR (1) | 50 | 50 | 50 |
| BR (2) | 50 | 50 | 50 |
| Noir de carbone (3) | 55 | - | - |
| Noir de carbone (4) | - | 35 | 33,5 |
| Silice (5) | - | - | 10 |
| Agent de couplage (6) | - | - | 0,5 |
| Plastifiant (7) | 20 | 10 | 10 |
| Cire | 1 | 1 | 1 |
| Antioxydant (8) | 3 | 3 | 3 |
| ZnO | 2.5 | 2.5 | 2.5 |
| Acide stéarique | 1,5 | 1,5 | 1,5 |
| Soufre | 1.6 | 1.6 | 1.6 |
| Accélérateur (9) | 1 | 1 | 1 |

| | | | |
|---|---|---|---|
| (1) caoutchouc naturel; (2) BR avec 4,3% de 1-2 ; 2,7% de trans ; 93% de cis 1-4 (Tg = -106°C) ; (3) Noir de carbone N330 de surface spécifique CTAB égal à 82 m²/g ; (4) Noir de carbone N234 de surface spécifique CTAB égal à 119 m²/g ; (5) silice "Ultrasil VN3" de la société Degussa ; (6) agent de couplage TESPT ("Si69" de la société Degussa) ; (7) huile MES (Flexon 683, société Exxon Mobil) ; (8) N-1,3-diméthylbutyl-N-phénylparaphénylènediamine (Santoflex 6-PPD de la société Flexsys) ; (9) N-cyclohexyl-2-benzothiazyl-sulfénamide (Santocure CBS de la société Flexsys). | | | |

Ainsi les compositions A, B et C sont définies comme suit :
- la composition témoin A est une composition de flanc de pneumatique de véhicule poids-lourd « classique » incluant un noir de carbone de grade 300,
- la composition B conforme à la présente invention comprend un noir de carbone de grade 200 avec un taux inférieur à celui utilisé dans les deux compositions témoins,
- La composition C conforme à l'invention comprend un coupage de noir de carbone de grade 200 et de silice.
Dans les compositions B et C, le taux de plastifiant est inférieur à celui de la composition témoin A ; en effet il est clair pour l'homme du métier que pour obtenir une rigidité satisfaisante d'une composition dans laquelle le taux de charge renforçante a été baissé, il faut baisser également le taux de plastifiant.

Les résultats de conduction électriques montrent que les trois compositions sont conductrices (leur résistivité électriques mesurée étant inférieure à 10⁶ Ohms) et les tests de résistance au roulement et de performance à la fissuration sont présentés dans le tableau 2 suivant.

**Tableau 2**

| **Composition :** | **A** | **B** | **C** |
|---|---|---|---|
| Résistance au roulement | Témoin | -0,15 kg/t | -0,13 kg/t |
| Performance à la fissuration | 100 | 400 | 137 |

On constate de façon surprenante que les pneumatiques dont les flancs comportent les compositions conformes à l'invention B et C, comprenant du noir de carbone de grade 200, présentent une nette amélioration en résistance au roulement par rapport aux pneumatiques comportant des flancs ayant une composition témoin classique A.

De plus, l'amélioration en terme de performance à la fissuration est également très nette qu'il s'agisse des compositions B ou C conformes à l'invention, et plus particulièrement pour la composition B.

Ainsi les compositions pour flanc de pneumatique comportant des noirs de carbones de surface spécifique CTAB supérieure ou égale à 90 m²/g dans une proportion comprise entre 30 et 40 pce, permettent donc de façon surprenante d'améliorer la résistance au roulement, la performance à la fissuration, tout en maintenant les propriétés du flanc notamment en terme de conduction.

## Revendications

1. Flanc pour pneumatique, ayant une composition de caoutchouc à base d'au moins un élastomère diénique, une charge renforçante comprenant du noir de carbone et un système de réticulation à base de soufre, **caractérisé en ce que** le noir de carbone a une surface spécifique CTAB supérieure ou égale à 90 m²/g et que la proportion de ce noir de carbone est comprise entre 30 et 40 pce, le noir de carbone constituant la charge renforçante majoritaire, et dans lequel la composition de caoutchouc comprend de 35 à 55% de caoutchouc naturel ou de polysioprène de synthèse, et de 65 à 45 % d'un élastomère diénique choisi parmi les polybutadiène, les copolymères styrène-butadiènes, les copolymères d'isoprène-butadiène, les copolymères d'isoprène-styrène et les copolymères d'isoprène-butadiène-styrène.

2. Flanc pour pneumatique selon la revendication 1, dans lequel la proportion de noir de carbone est supérieure ou égale à 33 pce.

3. Flanc pour pneumatique selon l'une quelconque des revendications 1 ou 2, dans lequel la proportion de noir de carbone est supérieure ou égale à 35 pce.

4. Flanc pour pneumatique selon l'une quelconque des revendications précédentes dans lequel le noir de carbone est utilisé en coupage avec une ou plusieurs autres charges renforçantes.

5. Flanc pour pneumatique selon la revendication 4, dans lequel le noir de carbone est utilisé en coupage avec une ou plusieurs autres charges renforçantes organiques.

6. Flanc pour pneumatique selon la revendication 4, dans lequel le noir de carbone est utilisé en coupage avec une ou plusieurs charges renforçantes inorganiques.

7. Pneumatique comportant un flanc selon l'une quelconque des revendications 1 à 6.

8. Pneumatique destiné à équiper des véhicules de tourisme comportant un flanc selon l'une quelconque des revendications 1 à 6.

9. Pneumatique destiné à équiper des véhicules poids lourd routiers comportant un flanc selon l'une quelconque des revendications 1 à 6.

## Patentansprüche

1. Reifenseitenwand mit einer Kautschukzusammensetzung auf Basis von mindestens einem Dienelastomer, einem verstärkenden Füllstoff, der Ruß umfasst, und einem Vernetzungssystem auf Basis von Schwefel, **dadurch gekennzeichnet, dass** der Ruß eine spezifische CTAB-Oberfläche größer oder gleich 90 m²/g aufweist und dass der Anteil dieses Rußes zwischen 30 und 40 phe liegt, wobei der Ruß den hauptsächlichen verstärkenden Füllstoff darstellt, und wobei die Kautschukzusammensetzung 35 bis 55 % Naturkautschuk oder synthetisches Polyisopren und 65 bis 45 % eines Dienelastomers, das aus Polybutadienen, Styrol-Butadien-Copolymeren, Isopren-Butadien-Copolymeren, Isopren-Styrol-Copolymeren und Isopren-Butadien-Styrol-Copolymeren ausgewählt ist, umfasst.

2. Reifenseitenwand nach Anspruch 1, wobei der Anteil an Ruß größer oder gleich 33 phe ist.

3. Reifenseitenwand nach Anspruch 1 oder 2, wobei der Anteil an Ruß größer oder gleich 35 phe ist.

4. Reifenseitenwand nach einem der vorhergehenden Ansprüche, wobei der Ruß als Mischung mit einem oder mehreren anderen verstärkenden Füllstoffen verwendet wird.

5. Reifenseitenwand nach Anspruch 4, wobei der Ruß als Mischung mit einem oder mehreren anderen organischen verstärkenden Füllstoffen verwendet wird.

6. Reifenseitenwand nach Anspruch 4, wobei der Ruß als Mischung mit einem oder mehreren anorganischen verstärkenden Füllstoffen verwendet wird.

7. Reifen mit einer Seitenwand nach einem der Ansprüche 1 bis 6.

8. Reifen zur Ausstattung von Personenfahrzeugen, umfassend eine Seitenwand nach einem der Ansprüche 1 bis 6.

9. Reifen zur Ausstattung von Schwerfahrzeugen, umfassend eine Seitenwand nach einem der Ansprüche 1 bis 6.

## Claims

1. Tyre sidewall, having a rubber composition based on at least one diene elastomer, a reinforcing filler comprising carbon black and a sulphur-based crosslinking system, **characterized in that** the carbon black has a CTAB specific surface area greater than or equal to 90 m²/g and that the proportion of this carbon black is between 30 and 40 phr, the carbon black constituting the predominant reinforcing filler, and in which the rubber composition comprises from 35 to 55% of natural rubber or of synthetic polyisoprene, and from 65 to 45% of a diene elastomer chosen from polybutadiene, styrene-butadiene copolymers, isoprene-butadiene copolymers, isoprene-styrene copolymers and isoprene-butadiene-styrene copolymers.

2. Tyre sidewall according to Claim 1, in which the proportion of carbon black is greater than or equal to 33 phr.

3. Tyre sidewall according to either one of Claims 1 and 2, in which the proportion of carbon black is greater than or equal to 35 phr.

4. Tyre sidewall according to any one of the preceding claims, in which the carbon black is used as a blend with one or more other reinforcing fillers.

5. Tyre sidewall according to Claim 4, in which the carbon black is used as a blend with one or more other organic reinforcing fillers.

6. Tyre sidewall according to Claim 4, in which the carbon black is used as a blend with one or more inorganic reinforcing fillers.

7. Tyre comprising a sidewall according to any one of Claims 1 to 6.

8. Tyre intended to be fitted to passenger vehicles that comprises a sidewall according to any one of Claims 1 to 6.

9. Tyre intended to be fitted to heavy road vehicles that comprises a sidewall according to any one of Claims 1 to 6.
